(19) Europäisches Patentamt
European Patent Office
Office européen des brevets

(11) **EP 2 699 798 B1**

(12) **EUROPÄISCHE PATENTSCHRIFT**

(45) Veröffentlichungstag und Bekanntmachung des Hinweises auf die Patenterteilung:
**07.06.2017   Patentblatt 2017/23**

(21) Anmeldenummer: **12724861.5**

(22) Anmeldetag: **16.04.2012**

(51) Int Cl.:
**F03D 1/06** $^{(2006.01)}$

(86) Internationale Anmeldenummer:
**PCT/DE2012/000391**

(87) Internationale Veröffentlichungsnummer:
**WO 2012/142997 (26.10.2012 Gazette 2012/43)**

(54) **WINDENERGIEANLAGE MIT HAUBENBLATTROTOR**

WIND TURBINE HAVING A HOOD BLADE ROTOR

EOLIENNE AVEC ROTOR À PALES EN FORME DE COIFFES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2011   DE 102011017327**

(43) Veröffentlichungstag der Anmeldung:
**26.02.2014   Patentblatt 2014/09**

(73) Patentinhaber: **AHLRICHS, Ewald**
**26419 Schortens (DE)**

(72) Erfinder: **AHLRICHS, Ewald**
**26419 Schortens (DE)**

(74) Vertreter: **Siekmann, Gunnar et al**
**Jabbusch Siekmann & Wasiljeff**
**Patentanwälte**
**Hauptstrasse 85**
**26131 Oldenburg (DE)**

(56) Entgegenhaltungen:
**WO-A1-2007/121904      CA-A1- 2 635 973**
**DE-A1- 10 252 759      DE-A1-102006 001 806**
**GB-A- 2 317 422**

EP 2 699 798 B1

**Beschreibung**

Stand der Technik

Eine Windkraftanlage nutzt die kinetische Energie des Windes, um diese in elektrische Energie umzuwandeln. In der Regel geschieht dies, indem die Bewegungsenergie der Windströmung auf die Rotorblätter wirkt und diese den Rotor in eine Drehbewegung versetzt.

Für die hier vorgeschlagene Erfindung sind die überproportionale Energieausbeute bei Erhöhung des Rotordurchmessers und die Auftriebskraft von aerodynamischen Profilen von Relevanz. Die nachfolgenden physikalischen Regeln liegen den hiermit verbundenen Fragestellungen zugrunde. Die Atmosphäre, aus der die Energie gewonnen wird, ist ein Fluid, in der die newtonsche Mechanik für einzelne Punktmassen/Luftmoleküle gilt: $\vec{F} = m \cdot a$. Das momentane Leistungsangebot des Windes kann durch den kinetischen Energiefluss pro Volumeneinheit ausgedrückt werden.

($E^{kin,Wid}$) kann hierbei als

$$E_{kin,Wind} = \frac{1}{2} m_{wind} \cdot v_{wind}^2$$

mit $m_{Wind}$ = Masse des Windes und $v_{Wind}$ = Geschwindigkeit des Windes dargestellt werden. Die in der Luftströmung erhaltene Leistung (als Energie des Windes pro Zeiteinheit) kann durch Ersetzen der Masse $m^{Wind}$ durch den Massenstrom $\dot{m}_{Wind}$ beschrieben werden:

$$P_{Wind} = \frac{1}{2} \dot{m}_{Wind} \cdot v_{Wind}^2$$

Der Massenstrom berechnet sich aus dem Produkt der Dichte($p^{wind}$), der Geschwindigkeit und der Fläche ($A_{Wind}$), die der Wind durchströmt: Somit ergibt sich die im Wind enthaltene Leistung als:

$$P_{Wind} = \frac{1}{2} p_{Wind} \cdot A_{Wind} \cdot v_{Wind}^3$$

Die theoretische Leistung einer Windkraftanlage ist also abhängig von der Windgeschwindigkeit (m/s), der Dichte (kg/m³) und der Fläche

$$\left( A_{Rotor} = \frac{\pi}{4} D_{Rotor}^2 \right),$$

wobei die tatsächlich nutzbare Windleistung $P_{Nútz,WEA}$ zur Leistung des Windes vor der Windenergieanlage WEA $P_{Wind}$ nach dem Betzschen Gesetz bei max. knapp 60 % liegt.

Die Energieausbeute steigt mit der zweiten Potenz des Rotordurchmessers, d. h., eine Verdoppelung des Rotordurchmessers führt zu einer vervierfachten Energieausbeute. Denn je länger die Rotorblätter, desto größer der Radius des Luftzylinders und desto mehr Luft weht pro Sekunde durch die Anlage. Das Volumen eines geometrischen Zylinders steigt mit dem Quadrat des Radius. Deshalb steigt die Energieausbeute mit dem Quadrat der Länge der Rotorblätter.

Formel für das Volumen eines Zylinders:

$V = \pi r^2 \cdot h$

V= Volumen (in Kubikmetern)

r = Radius der Grundfläche (in Metern, hier: Länge der Rotorblätter)

h = Höhe (in Metern, in diesem Fall eher die Länge)

Um eine gute Windausnutzung zu erreichen, werden daher möglichst lange Rotorblätter eingesetzt. Bei der Windenergienutzung haben sich dreiarmige Rotoren mit Flügen, die nach dem Prinzip des Flugzeugsbaus konzipiert wurden, durchgesetzt. Von Rotoren mit einem oder zwei Flügeln wurde inzwischen Abstand genommen, da die unterschiedlichen Kräfte, die durch das vertikale Windprofil entstehen, eine zu hohe Belastung für das Material darstellen. Dreiblattrotoren sind schwingungstechnisch auch einfacher beherrschbar. Bei ihnen sind die Rotorblätter als aerodynamisches Profil ausgelegt, das ähnlich wie bei den Flügeln im Flugzeugbau durch einen Druckunterschied einen Auftrieb erzeugt.

Mehr als 95 % aller größeren Windkraftanlagen besitzen einen propellerartigen Rotor. Sie sind Auftriebsläufer mit horizontaler Achse. Ansonsten werden Windkraftanlagen mit vertikaler Achse eingesetzt und zwar mit einem Darrieus-Rotor oder H-Darrieus-Rotor. Eine alternative Windkraftanlage mit vertikaler Drehachse geht aus der WO 2007/121 904 A1 hervor. Bei dieser sind an Auslegerarmen Wanten, Vorstag, Achterstag und ein Mast befestigt, wobei jedem der Auslegerarme ein an Mast, Vorstag, Achterstag und Wante befestigtes Segel zugeordnet ist.

Bei der DE 102 52 759 A1 sind an einer Nabe um eine horizontale Rotordrehachse herum drehbare Auslegerarme befestigt. Jedem der Auslegerarme ist dabei ein Rotorsegel zugeordnet, dass aus flexiblem, wetterfesten Gewebematerial bestehen soll und mit einer Längsseite an dem Auslegerarm befestigt ist. Diese Rotorsegel sollen jeweils durch einen Pendelstab stabilisiert werden, der zwischen Auslegerarm und einem äußerem Ende des Rotorsegels gehalten ist und dieses spannt. Kennzeichnende Merkmale sind dabei, dass der Mast insgesamt drehbar ist, anstatt nur eine auf diesem angeordnete Gondel und dass der Mast abklappbar ist.

Eine weitere Ausführung einer Windkraftanlage ist in der GB 2 317 422 A offenbart. Diese zeigt eine Mehrzahl von Deltaflügeln, welche über Auslegerarme an einer gemeinsamen Nabe befestigt sind, mit der sich die Auslegerarme drehen können. Jeder Deltaflügel ist dabei derart schwenkbar an dem jeweiligen Auslegerarm befestigt, dass sich die einzelnen Deltaflügel selbstständig in einem Fluidstrom ausrichten sollen.

Bei den heutigen üblichen Windkraftanlagen werden die Rotorblätter auf Grund des Verhältnisses von Masse und Festigkeit bzw. Steifigkeit hauptsächlich aus endlosfaserverstärkten Kunststoff-Verbunden hergestellt. Die Forschung fokussiert sich primär auf die Fragestellung, wie das Gewicht der Materialien bei konstan-

ter Festigkeit immer weiter minimiert werden kann. Um hier Fortschritte zu erzielen, werden bspw. Forschungsvorhaben unterstützt, die sich mit der Frage auseinandersetzen, wie eine Rotorblattproduktion auf Vakuum-Injektionsverfahren mit Epoxidharz umgestellt werden kann. Von einem Durchbruch kann bei dieser Problemstellung bisher nicht gesprochen werden, so dass die Rotorblätter nach wie vor schwer und extrem hohen Belastungen ausgesetzt sind. Diese Belastungen wirken sich auf die Fundamente, die Türme, die Gondeln, nebst technischen Einrichtungen (Getriebe, Windnachführung etc.) aus und führen zu beträchtlichen Kosten und in seiner Erstellung zu erheblichen Herausforderungen. Ein schlichtes Hochskalieren auf Basis bestehender Anlagen ist nicht möglich. Daher sind diesbezügliche Innovationssprünge, um Lösungen zu haben, sich auf material-, gewichts- und ertragsoptimierend auf den äußeren Radius der Rotorbahn, d. h., den Bereich des größten Energieertrages zu fokussieren, derzeit nicht absehbar.

Eine zusätzliche Belastung entsteht durch das vertikale Windprofil, durch das die Rotorblätter, die sich im oberen Ende der Rotorbahn befinden, einem größeren Druck ausgesetzt werden als diejenigen, die sich gerade unten befinden. Man versucht, diesen Druckunterschied unter Vernachlässigung der optimalen Windausbeute durch die Verwendung dreiarmiger Flügel einzudämmen. Dennoch sind die hieraus erwachsenen Kräfte auf das Material und insbesondere die Lager immens.

Die vorherigen Ausführungen belegen, dass die größte Energie immer an den Enden der Rotorblätter generiert wird, d. h., bei einer parzellierten Betrachtung der Rotorblätter ist die Energieausbeute umso größer, je weiter man sich von der Nabe entfernt und umso geringer, je dichter man sich der Nabe nähert.

Aber Materialeinsatz und -festigkeit müssen aus statischen Gründen in der Nähe der Nabe am größten sein, da hier die Last des gesamten Rotorblattes aufgefangen wird. Die auf die Nabe und den Turm einwirkenden Lasten sind infolgedessen ebenfalls enorm. Es wäre aus Sicht der Relation zwischen Material und Energieertrag am sinnvollsten, nur die Energie an den Enden der Rotorblätter aufzunehmen und eine Minimierung des Materials zwischen der Nabe und dem Endstück vorzunehmen. Jedoch würden herkömmliche aerodynamische Blattstrukturen und -formen an den Spitzen nicht den Mehrertrag bringen, den man aus dem Delta zwischen Rotorblättern unterschiedlicher Länge errechnen würde.

In dem Dokument CA 2 635 973 A1 wird eine weitere Windenergieanlage aufgezeigt. Diese weist drei deltaförmige Flügel auf, die zueinander in einem Winkel von 120 Grad angeordnet sind und über Auslegerarme drehbar an Nabe und Gondel der Windenergieanlage gehalten sind. Jeder Auslegerarm ist dabei um seine Längsachse drehbar an der Nabe gelagert. Zusammen mit den jeweiligen Auslegerarmen können die Flügel dabei einzeln zum Wind bzw. zur Nabe angestellt werden, wobei die Flügel durch Drehen der Auslegerarme um diese aus bzw. in den Wind gestellt werden. Die Flügel sind dabei fest mit den Auslegerarmen verbunden, um diese über die Drehung der Auslegerarme steuern zu können.

Problemstellung

Um Windkraftanlagen wirtschaftlich betreiben zu können, müssen Windkraftanlagen große Rotordurchmesser haben. Zur Erreichung dieser Rotorblattlängen bedarf es bei der herkömmlichen Nutzung jedoch teurer und schwerer Rotorblattkomponenten. Die Schwere der Rotorblätter führt auch zu einer großen Belastung der sonstigen Komponenten einer Windkraftanlage (Fundament, Turm, Getriebe, Lager etc.). Durch Gewicht und Lasten sind die technischen Möglichkeiten in der traditionellen Vorgehensweise, immer längere Rotorblätter einzusetzen, begrenzt. Auch Fragestellungen hinsichtlich der unterschiedlichen Kräfte auf Grund des vertikalen Windprofils sind noch nicht abschließend gelöst.

Lösung

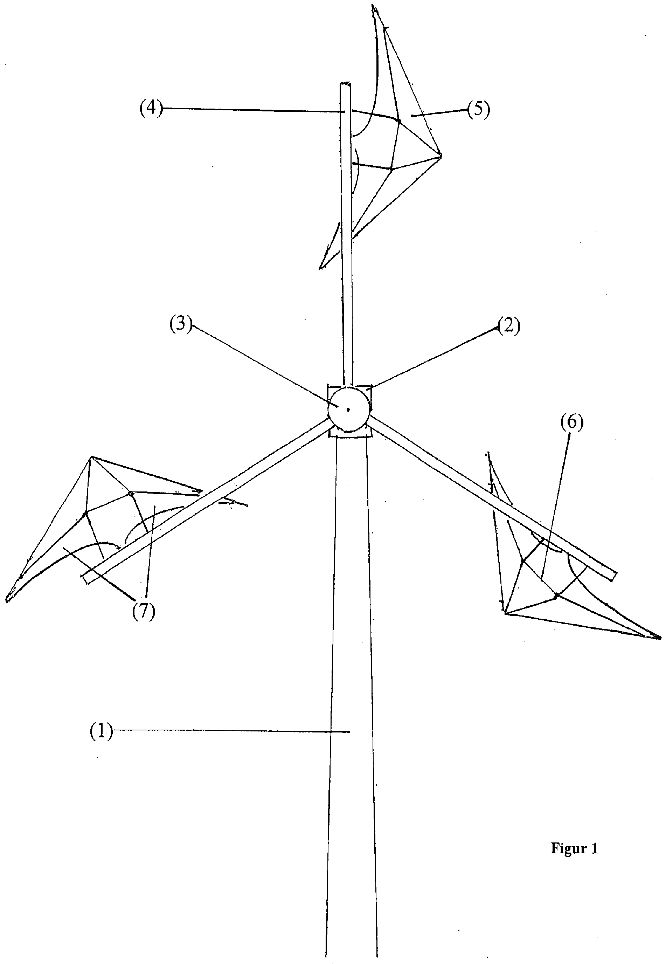

Die hier vorgeschlagene Lösung sieht vor, dass die Blätter, die die Energie aufnehmen, sich nicht direkt an der Nabe befinden, sondern über Ausleger (Arme) - Fig. 1 (4) verbunden sind und sich an den Außenenden der Ausleger befinden. Hierdurch wird die erhöhte Energie an den Außenseiten, d. h. auf der Außenbahn des Rotorradius über spezielle Hauben - Fig. 1 (5) - aufgenommen, also nicht über die üblichen Rotorblattformen. Die am Ende der Ausleger arretierten Hauben, die die kinetische Energie des Windes aufnehmen, müssen nach aerodynamischen Gesichtspunkten so geformt werden, dass sie möglichst viel Energie aufnehmen können. Dieses geschieht u. a. dadurch, dass die Hauben in Form eines Delta-Flügels ausgebildet werden. Diese Haubenblätter, die einem Nurflüglerflugzeug ähneln, sind über eine Unterkonstruktion bzw. eine Basis - Fig. 1 (6) - mit den Auslegern verbunden und werden hierüber gesteuert. Die Haubenblätter werden leeseitig an den Auslegerarmen, d. h., auf der vom Wind abgewandten Seite der Auslegerarme befestigt.

Die Deltakonstruktion der Haubenblätter pfeilt nach vorn, d. h., sie verjüngt sich in Richtung Drehbewegung und wird nach hinten konkav ausgebildet. Hierbei ist es möglich einen, zwei oder mehrere Flügel nach hinten ausgewölbt zu verwenden. Bei einer zweiflügligen Ausführung ähnelt sich die Form dem eines einem Sportlenkdrachens. Die Wahl der geometrischen Profildaten ist evident für die Energieausbeute. Die hiermit verbundenen Fragestellungen sind mit denen der Luftfahrt vergleichbar. Die Profiltiefe, die Profilwölbung, die Hohlwölbung, die Profildicke, der Nasenradius, der Hinterkantenwinkel, die Wölbungsrückenlage und die Dickenrücklage sind so zu wählen, dass hierdurch der größte Vortrieb bewirkt wird. Hierbei sind die Erkenntnisse zur Strömungslehre aus der Luftfahrt zu Grunde zu legen.

Das Haubenblatt ist symmetrisch angelegt und entsprechend V-förmig ausgebildet. Es wird so angebracht, dass die Spitze, d. h. die Nase zur Windrichtung neigt. Hierdurch wird eine Auftriebskraft in Lotrichtung bewirkt. Um diese Kraft in eine Kreisbewegung umzulenken, sind die Hauben nicht parallel zu Auslegern zu justieren, sondern in einem Winkel dergestalt, dass die Flügel, die innen liegen, sich näher an den Auslegern befinden, als die, die außen liegen. Hierdurch kann eine optimale Verlagerung des Druckzentrums erzielt werden, womit eine ideale Ausrichtung auf die Rotationsbahn erreicht wird. Somit würde unter Optimierung der Pfeilung und den beschriebenen Fragestellungen der Strömungslehre die Tangentialkraft, die auch bei herkömmlichen Anlagen für die Drehung des Rotors sorgt, bestmöglich auf die Nabe übertragen.

Das gleiche Ergebnis würde man erzielen, wenn die Hauben nicht symmetrisch hergestellt werden würden, sondern gleich so, dass sie eine optimierte Kreisbewegung einnehmen. Im Fortgang dieser Patentanmeldung wird jedoch eine Beschreibung gewählt, die von symmetrisch geformten Blättern ausgeht.

Durch Winkeländerung des Haubenblattes zum Auslegerarm kann über die Basis die Anlage gesteuert werden. So ist eine Reduzierung oder ein Stopp der Anlage bei Starkwinden zu bewirken, in dem man den Winkel der Blätter zum Ausleger verkleinert oder die Blätter ganz parallel zu den Auslegern stellt. Durch kleinste Veränderungen der Winkel kann man die Kräfte steuern, d. h., eine Pitch-Regelung herbeiführen. Die hiermit ausgestattete Windkraftanlage müsste somit auch nicht mit zusätzlichen Steuerungssystemen versehen werden, sondern könnte allein über entsprechende Winkelveränderungen ohne großen Energieaufwand geführt und ausgerichtet werden. Es wären auch noch andere Formen der Steuerung möglich. Würde man z. B. die Zweiflügler-Variante wählen, so könnte man auch über die Veränderung (Verkleinerung/Vergrößerung) des Mittelrückens eine begrenzte Beeinflussung der Kräfte vornehmen.

Ein weiterer Vorteil in der Erfindung liegt darin, dass die einzelnen Haubenblätter relativ einfach und individuell, d. h, die Blätter für sich an den Auslegern, gesteuert werden können. Dadurch bietet sich die Möglichkeit, entweder durch eine stete Veränderung des Winkels zwischen Ausleger und Haubenblatt oder durch eine permanente Veränderung des Rückenwinkels bei einem Zweiflügler während der Kreisbewegung die Lasten laufend auszugleichen.

So wäre es über die Einzelsteuerung der Haubenblätter möglich, die permanent unterschiedlichen Kräfte auf Grund des vertikalen Windprofils zu nivellieren.

Auch andere Konstruktionsformen für das Haubenblatt wären möglich. So könnten auch einfachere Formen mit niedrigerem Wirkungsgrad die Hauben bilden und zwar in Form einer gewölbten Matte, ähnlich wie beim Gleitschirm, oder im Zuschnitt eines Schirms.

Zur Führung der Haubenblätter auf der Kreisbahn könnten auch andere Techniken zur Anwendung kommen. So wäre es möglich, die Ausleger durch eine Schienenkreisbahn zu ersetzen, die bis an die Hauben heranragt und auf denen die Haubenblätter dann befestigt sind oder auf denen sie laufen. Die Schienen, die den Radius wiedergeben, der dem Außenkreis der Ausleger entspräche, würden dann entweder einen Generator (bei Befestigung) antreiben oder die elektrische Energie würde über eine Magnetbahn generiert werden. Den Durchmesser eines Ringgenerators könnte man derart weit ausdehnen, dass an diesem dann die Haubenblätter direkt über eine Basis, mehr oder weiniger armlos angebracht werden könnten.

Ergänzend wäre es möglich, den Überdruck unter den Flügeln und die dort durchfließende Windströmung durch kleine Rotoren zusätzlich in Energie umzuwandeln.

Bei der vorliegenden Erfindung ist sowohl eine luv- als auch leeseitige Anordnung des Rotors möglich. Insbesondere dann, wenn die die Hauben derart groß dimensioniert sind, dass der Platzbedarf für die Rotation zwischen Turm und Nabe nicht ausreicht, resp. der diesbezügliche Abstand im Hinblick auf die Gewichtsverlagerung zu groß gestaltet werden müsste, könnte die Nabe auf der Leeseite angebracht werden.

Die Auslegerarme können aus gängigen Materialien, wie z. B. Kunststoff, metallischen und nichtmetallischen Stoffen, hergestellt werden. Die Hauben könnten aus den bekannten Materialien, wie sie im Windkraftanlagen- und Flugzeugbau zum Einsatz kommen, gebildet werden, aber auch mit elastischen Stoffen, wie bspw. den flexiblen Elementen aus dem Drachenbau, bespannt werden.

Mit der hier vorgeschlagenen Erfindung wird somit eine Windkraftanlage entwickelt, die den beschriebenen Effekt der erhöhten Energie an den Rotoraußenenden dadurch ausnutzt, dass die rotornahen Bestandteile des Rotorflügels, die eine geringe Energieausbeute generieren, durch leichte und kostengünstige Auslegersysteme ersetzt werden und die Energie des Außenradius durch spezielle Konstruktionen aufgenommen wird.

Gewerbliche Anwendung

Die gewerbliche Anwendbarkeit dieser Erfindung liegt in der ertragreichen und kostengünstigeren Nutzung von Windenergie bei Verwendung des hiermit vorgeschlagenen Rotorsystems gegenüber den herkömmlichen Rotorsystemen.

Vorteilhafte Wirkungen

Die hier vorgeschlagene Erfindung hat viele Vorteile gegenüber der bisherigen, d. h., traditionellen Windkraftnutzung. Zunächst sind hier die niedrigeren Kosten und das geringere Gewicht der Rotorblätter gegenüber einer herkömmlichen Windkraftanlage anzuführen. Die Verbesserungen und der Nutzen hieraus sind unter dem Abschnitt "Problemlösung" bereits sichtbar geworden. Ein Folgeeffekt resp. Nebeneffekt wäre ggf. auch, dass für die Rotorblätter kein oder nur ein geringes Gegengewicht (Generator/ Getriebe) auf dem Turm vorhanden sein muss. Somit könnten der Generator und das Getriebe auch evtl. am Boden installiert werden. Die Kräfte von der Nabe zum Boden könnten in diesem Fall dann mittels Seilen, Ketten oder Kardanvorrichtungen übertragen werden. Hierdurch reduzieren sich die Erstellungskosten nochmals erheblich. Viele Reparaturen können kostengünstig am Boden vorgenommen werden. Die Montage und Demontage von einzelnen Elementen der Anlage ist erheblich einfacher und billiger. Die Kräfteverschiebungen durch das vertikale Windprofil können zudem leichter ausgeglichen werden.

Ausführungsbeispiel

Bei diesem Ausführungsbeispiel wird eine dreiarmige Haubenblattwindkraftanlage dargestellt, die Haubenblätter mit zwei Flügeln - Fig. 1 (7) - verwendet. Wie bei herkömmlichen Windkraftanlagen ist die Nabe - Fig 1 (3) - an der drehbaren Gondel - Fig. 1 (2) - , die sich auf dem Turm - Fig. 1 (1) - befindet, befestigt. Die Nabe dient zur Verankerung der Auslegerarme - Fig. 1 (4) und der Energieübertragung auf den Generator. An den Auslegerenden an der Außenseite werden die Haubenblätter - Fig. 1 (5) fixiert. Die Steuerung der Haubenblätter erfolgt über die Basis resp. Unterkonstruktion - Fig. 1 (6). Durch Veränderung des Winkels zwischen den Auslegerarmen und den Haubenblättern können die Blätter in den Wind gedreht werden und den Wind aufnehmen oder auch wieder aus dem Wind genommen werden.

Bezugszeichenliste/ Abbildungslegende zu Figur 1:

1    Turm
2    Gondel
3    Nabe
4    Auslegerarm
5    Haubenblatt
6    Basis / Unterkonstruktion
7    Haubenblattflügel

Patentansprüche

1. Windkraftanlage mit einem Turm (1), einer auf dem Turm (1) angeordneten Gondel (2), die eine Nabe (3) mit einer horizontal ausgerichteten Drehachse aufweist, wobei Haubenblätter (5) über Auslegerarme (4) mit der Nabe (3) verbunden sind und die Haubenblätter (5) in Form eines Delta-Flüglers ausgebildet sind,
**dadurch gekennzeichnet,**
**dass** die Haubenblätter (5) auf der windabgewandten Seite der Auslegerarme (4) befestigt sind, und

**dass** die Windkraftanlage durch Winkeländerungen der Haubenblätter (5) gegenüber den Auslegerarmen (4) über Unterkonstruktionen (6) steuerbar ist.

2. Windkraftanlage nach Anspruch 1, **dadurch gekennzeichnet, dass** die Haubenblätter (5) am äusseren Ende der Auslegerarme (4) befestigt sind.

3. Windkraftanlage nach Anspruch 1, **dadurch gekennzeichnet, dass** sich die Haubenblätter (5) nach vorne zu deren Spitze verjüngen und nach hinten als ein, zwei oder mehr konkav gewölbte Flügel (7) ausgebildet sind.

4. Windkraftanlage nach Anspruch 1, **dadurch gekennzeichnet, dass** die Unterkonstruktionen (6) an zwei Armen mit den Auslegern verbunden werden.

5. Windkraftanlage nach Anspruch 1 und 4, **dadurch gekennzeichnet, dass** die inneren Arretierungen der Unterkonstruktionen (6) mit einem Zugnachgebemechanismus zur automatischen Windkorrektur versehen werden.

6. Windkraftanlage nach Anspruch 1, **dadurch gekennzeichnet, dass** in den konkaven Flügeln (7) der Haubenblätter (5) zusätzliche Windrotoranlagen integriert werden.

7. Windkraftanlage nach Anspruch 1, **dadurch gekennzeichnet, dass** die Haubenblätter (5) in Form einer gewölbten Matte ausgebildet werden.

8. Windkraftanlage nach Anspruch 1, **dadurch gekennzeichnet, dass** die Haubenblätter (5) in Form eines Schirms ausgebildet werden.

9. Windkraftanlage nach Anspruch 1, **dadurch gekennzeichnet, dass** durch permanente Winkeländerungen der Haubenblätter (5) gegenüber den Auslegern die vertikalen Kräfteunterschiedes des Windes ausgeglichen werden.

Claims

1. Wind powerplant with a tower (1), a nacelle (2) arranged on the tower (1), which nacelle (2) has a hub (3) with a horizontally oriented axis of rotation, wherein hood-form blades (5) are connected with the hub (3) by way of cantilever arms (4), and the hood-form blades (5) are designed in the form of a delta wing,
**characterised in**
**that** the hood-form blades (5) are attached to the sides of the cantilever arms (4) that are facing away from the wind, and
in that the wind powerplant can be controlled by means of alterations of the angles of the hood-form blades (5) relative to the cantilever arms (4) by way of sub-structures (6).

2. Wind powerplant according to claim 1, **characterised in that** the hood-form blades (5) are attached at the outer end of the cantilever arms (4).

3. wind powerplant according to claim 1, **characterised in that** the hood-form blades (5) taper forwards to their tips, and are designed rearwards as one, two or more concavely curved wings (7).

4. Wind powerplant according to claim 1, **characterised in that** the sub-structures (6) are connected by two arms with the cantilevers.

5. Wind powerplant according to claim 1 and 4, **characterised in that** the inner detents of the sub-structures (6) are provided with a tension accommodation mechanism for purposes of automatic wind correction.

6. Wind powerplant according to claim 1, **characterised in that** additional wind rotor plants are integrated in the concave wings (7) of the hood-form blades (5).

7. Wind powerplant according to claim 1, **characterised in that** the hood-form blades (5) are designed in the form of a curved sheet.

8. Wind powerplant according to claim 1, **characterised in that** the hood-form blades (5) are designed in the form of a paraglider wing.

9. Wind powerplant according to claim 1, **characterised in that** by means of permanent alterations in the angles of the hood-form blades (5) relative to the cantilevers, compensation is made for the vertical differences in wind force.

## Revendications

1. Éolienne avec une tour (1), une nacelle (2) placée sur la tour (1) qui comporte un moyeu (3) avec un axe de rotation orienté à l'horizontale, des pales en coupole (5) étant reliées par l'intermédiaire de cantilever-bras (4) avec le moyeu (3) et les pales en coupole (5) étant conçues sous la forme d'une aile delta,
   **caractérisé en ce que**
   les pales en coupole (5) sont fixées sur le côté opposé au vent des avant-bras (4) et
   **en ce que** l'éolienne est pilotable par l'intermédiaire de substructures (6), par des modifications de l'angle des pales en coupole (5) par rapport aux cantilever-bras (4).

2. Éolienne selon la revendication 1, **caractérisée en ce que** les pales en coupole (5) sont fixées sur l'extrémité extérieure des cantilever-bras (4).

3. Éolienne selon la revendication 1, caractérisée en e que les pales en coupole (5) se rétrécissent vers l'avant, en direction de leur pointe et sont conçues vers l'arrière en tant qu'une, que deux ou plusieurs ailes (7) à voussure concave.

4. Éolienne selon la revendication 1, **caractérisée en ce que** les substructures (6) sont reliées sur deux bras avec les cantilever.

5. Éolienne selon la revendication 1 et 4, **caractérisée en ce que** les blocages intérieurs des substructures (6) sont munis d'un mécanisme de relâchement à la traction, pour la correction automatique du vent.

6. Éolienne selon la revendication 1, **caractérisée en ce que** dans les ailes (7) concaves des pales en coupole (5) sont intégrés des rotors éoliens supplémentaires.

7. Éolienne selon la revendication 1, **caractérisée en ce que** les pales en coupole (5) sont conçues sous la forme d'une natte voûtée.

8. Éolienne selon la revendication 1, **caractérisée en ce que** les pales en coupole (5) sont conçues sous la forme d'un parapluie.

9. Éolienne selon la revendication 1, **caractérisée en ce que** par des modifications permanentes des angles des pales en coupole (5) par rapport aux cantilever-bras les variations de force vertical du vent sont compensées.

(4)

(5)

(3)

(2)

(6)

(7)

(1)

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007121904 A1
- DE 10252759 A1
- GB 2317422 A
- CA 2635973 A1